# EUROPEAN PATENT SPECIFICATION

(11) **EP 3 542 637 B1**
(45) Date of publication and mention of the grant of the patent: **12.06.2024**
(21) Application number: 17871806.0
(22) Date of filing: 10.11.2017
(51) Int. Cl.: A23J 3/00, A23J 3/26, A23L 13/40, A23L 13/60, A23L 17/00

(54) **PROTEIN MATERIAL HAVING LIVESTOCK MEAT-LIKE TEXTURE AND METHOD FOR MANUFACTURING SAME**
PROTEINMATERIAL MIT NUTZTIERFLEISCHÄHNLICHER TEXTUR UND VERFAHREN ZUR HERSTELLUNG DAVON
MATÉRIAU PROTÉIQUE AYANT UNE TEXTURE DE TYPE VIANDE DE BÉTAIL ET SON PROCÉDÉ DE FABRICATION

(30) Priority: 18.11.2016 JP 2016225117
(43) Date of publication of application: 25.09.2019
(73) Proprietor: NISSUI CORPORATION, Tokyo 105-8676 (JP)
(72) Inventor: HARADA, Kazushi, Minato-ku Tokyo 105-8676 (JP); NOGUCHI, Yurika, Minato-ku Tokyo 105-8676 (JP); MORI, Takashi, Minato-ku Tokyo 105-8676 (JP); KUBOTA, Mitsutoshi, Minato-ku Tokyo 105-8676 (JP)
(74) Representative: Zimmermann & Partner Patentanwälte mbB
(86) International application number: PCT/JP2017/040541
(87) International publication number: WO 2018/092685

(56) References cited:
- EP-A1- 2 068 643
- WO-A1-2013/047644
- JP-A- S 542 363
- JP-A- S63 164 863
- JP-A- 2007 209 283
- JP-A- 2008 161 105
- JP-B2- 3 438 813
- JP-B2- 4 634 375
- US-A- 4 125 630
- US-A- 4 612 203
- US-A- 4 615 899

## Description

### TECHNICAL FIELD

The present invention relates to a protein material which is made from fish meat, chicken meat or the like as a raw material and has a livestock meat-like texture.

### BACKGROUND ART

Due to the recent westernization in eating habits in Japan, meat dishes are preferred, and the consumption of fish has been decreased. On the other hand, there is a concern about health risks involved by an unbalanced diet with more processed livestock meat products. The demand for paste products made from fish meat has not been increasing, and a new product following imitation crab meat is awaited.

The texture of fish meat is largely different from that of livestock meat. Various attempts have been made to process fish meat into livestock meat-like products, and the present applicant has also proposed methods such as those described in PTLs 1 and 2 in the past.

As a technique for acid-denaturing fish meat, PTL 3 discloses a method for producing a fibrous food by releasing meat paste in a fibrous form into an aqueous solution of a protein-denaturing agent containing an acid, performing denaturation, and then performing washing with water and heating.

PTL 4 discloses retorted fish compositions comprising a structured plant protein product with substantially aligned protein fibers and fish meat. In addition, the invention provides processes for producing retorted fish compositions and retorted simulated fish compositions in which an appropriate colorant is combined with the structured plant protein product.

### CITATION LIST

### PATENT LITERATURE

PTL 1: Japanese Patent No. 4634375
PTL 2: Japanese Patent No. 3438813
PTL 3: JP-B-S58-1904
PTL 4: EP 2 068 643 A1

### SUMMARY OF INVENTION

### TECHNICAL PROBLEM

An object is to provide a protein material with a new texture by imparting livestock meat-like hardness and elasticity to an animal protein material such as fish meat and chicken meat, which have poor hardness and elasticity as compared to those of livestock meat such as beef and pork.

While livestock meat sausages are formed of a mixture of lean meat, fat and tendons with different textures, fish meat sausages have a uniform texture. An object is to provide a processed livestock meat-like food by imparting a nonuniform texture to a processed fish meat food such as a fish meat sausage.

### SOLUTION TO PROBLEM

The present inventors have found that a material having a livestock meat-like hardness and elasticity can be obtained by subjecting a meat paste of minced fish meat to an extruder together with an organic acid, and performing a heating and a chopping by agitation at the same time, and have completed the present invention.

The present invention is as described in the appended claims.

### ADVANTAGEOUS EFFECTS OF INVENTION

The method of the present invention can give a livestock meat-like protein material from a fish meat or a chicken meat as a raw material. A food having a livestock meat-like texture can be produced by using the protein material.

### BRIEF DESCRIPTION OF DRAWINGS

[FIG. 1] FIG. 1 is a figure showing the results of Example 5, which is a figure showing the difference in the texture of fish meat sausages caused by a difference in the addition amount of the protein material of the present invention.
[FIG. 2] FIG. 2 is a figure showing the results of Example 6, which is a figure showing the difference in the texture of fish meat sausages of cases in which heated fish meat gel was added in addition to the protein material of the present invention.
[FIG. 3] FIG. 3 is a figure showing the results of Example 6, as a Comparative Example, which is a figure showing the difference in the texture of fish meat sausages of cases in which a heated fish gel alone was added, the difference caused by a difference in the addition amount.
[FIG. 4] FIG. 4 is a figure showing the results of the sensory evaluation of the eel-like foods of Example 9.

### DESCRIPTION OF EMBODIMENTS

The present invention relates to a method for producing a protein material having a livestock meat-like texture, including performing an addition of an organic acid and a heating at the same time, with respect to a paste of an animal protein. In the present invention, the livestock meat-like texture means having such a texture with hardness and chewiness based on connective tissue such as collagen contained in livestock meat in a large amount.

The protein source used in the present invention is fish meat or chicken meat. Although the fish meat may be fish meat of any kind of fish, white-meat fish is preferable because it is not provided with a peculiar taste and flavor and is highly versatile. Specific examples thereof include: codfishes such as Alaska pollock (Theragra chalcogram) and Micromesistius australis, which are of family Gadidae, order Gadiformes, and Hoki (Macruronus magellanicus), which is of family Macruronidae, order Gadiformes; Lizard fish (Saurida sp.), which is of family Synodontidae, order Aulopiformes; Nemipterus virgatus; Beryx splendens; Upeneus japonicas; hake; salmon; Trichiurus lepturus; and the like. The chicken meat may be any meat as long as it is edible meat of poultry.

In the present invention, the animal protein is preferably used after mincing the meat of various kinds. In the case of fish meat, Otoshi-mi (minced fish meat), surimi (water-washed minced fish meat), frozen-minced fish meat, or the like is preferably used as a raw material. Also in the case where a filet or the like is used, a material obtained by chopping in advance is preferably used as a raw material. Although the raw material may be composed of the animal protein only, an auxiliary material such as salt, another seasoning, a plant protein, and starch can be added and used. Specific examples thereof includes: plant proteins such as soybean protein; starches such as cornstarch, wheat flour and potato starch; various chemical or natural seasonings such as sodium glutamate; spices; flavors; colorants; fats and oils; and the like, and they are appropriately selected and used depending on the aimed texture, characteristics and the like. Such a seasoning or an auxiliary material is evenly blended by kneading with the meat before mixing the organic acid. Also in the case where the auxiliary material or the like is used, the ratio of the animal protein material based on the total amount is preferably 70% by weight or more, and particularly preferably 80% by weight or more or 90% by weight or more. Although it can be produced by using the water contained in the fish meat and the like only, it can be made soft by adding water in the case where a soft property is desired. The water-absorbing property can be improved by adding salt to the animal protein material and kneading.

The organic acid used in the present invention may be any organic acid that can be used for foods, and examples thereof include acetic acid, citric acid, succinic acid, fumaric acid, malic acid, gluconic acid, lactic acid, tartaric acid, and the like. Acetic acid, citric acid, succinic acid, or fumaric acid is preferable. An organic acid having an acetyl group is preferable, and acetic acid is particularly preferable. The addition amount of the organic acid based on the wet weight of the animal protein is from 0.1 to 1.0% by weight, and further preferably from 0.1 to 0.8% or from 0.1 to 0.5%. Also in the case where water is added to the raw materials, the same amount of the organic acid may be added based on the weight of the animal protein. The organic acid used is appropriately diluted so as to be an amount suitable for being evenly mixed with the animal protein.

While the organic acid is added to a paste of the animal protein, heating is performed in a manner that the core temperature becomes 80 to 100°C in the end. Agitation at the same time with the heating can achieve chopping. In the chopping by the agitation, agitation and chopping are performed in a manner that the granular size of the protein material becomes around from 0.2 to 10 mm in the end. It is important to balance between denaturing by the organic acid and solidification by the heating. Therefore, the use of an extruder as a device makes easy to balance the heating and agitation, and can perform a large-scale production stably. Also in the case where the extruder is used, pressure is not applied. The extruder is used in an open system in the present invention, although it is often used in a use method of heating and pressurizing at the same time. A silent cutter having a heating function can also be used instead of the extruder.

In a method without using an extruder, an organic acid preparation which is designed such that the organic acid functions through heating can be used. For example, a method of using the organic acid coated with solid fat or oil can be employed. Because the organic acid is coated with solid fat or oil, it does not come into contact with the paste until being heated. When heated, the solid fat or oil melts, and the organic acid comes into contact with the paste. According to this method, the addition of the organic acid and heating can be performed substantially at the same time. Moreover, because arabonolactone such as gluconolactone generates an organic acid such as gluconic acid through hydrolysis, an effect similar to that of the organic acid coated with solid fat or oil can be obtained also by adding the arabonolactone as the organic acid and then performing heating. Here, because decomposition of such a lactone progresses gradually due to hydrolysis even in an unheated state, the heating is preferably performed promptly after the addition.

According to these methods, it becomes easy to balance between the denaturation by the organic acid and solidification by the heating, and a protein material with stable quality can be produced.

The extruder used in the present invention is preferably a twin-screw extruder because a raw material with a high water content and a high viscosity is formed into granules in chip shape in the barrel.

The operational conditions of the extruder can be adjusted in the ranges of a rate of rotation of the screw of from 50 to 250 rotations/minute and a barrel temperature of from 80 to 200°C. As the rate of rotation of the screw increases, the granule size of the protein material tends to become larger. It is considered that, as the sending rate becomes faster, the balance between the denaturation by the acid and the progress of binding by the heating is tilted toward strengthened the binding. As the rate of rotation decreases, the granule size becomes smaller because chopping progresses more. Accordingly, the rate of rotation of the screw is preferably from 75 to 200 rotations/minute, and further preferably from 75 to 150 rotations/minute. Because the thermal conductivity increases as the water content of the raw material is higher, production can be conducted also at a higher rate of rotation of the screw. The heating temperature may be under a condition under which the core temperature becomes from 80 to 100°C in the end. Because an animal protein material is generally at a low temperature, even heating can be performed by setting in a manner that the temperature increases from the first half of the extruder toward the latter half.

By adjusting the conditions as described above, a protein material having a granular form ranging within a size of from 0.2 to 10 mm, and having properties of hardness being from 8 to 30 N, pH being from 5 to 7 and a water content being around from 70 to 85% and can be produced. Such properties with both hardness and elasticity give a texture similar to an elastic texture derived from collagen or the like contained in livestock meat. The granular form in the present invention does not mean a strict spherical shape but means a mixture of various shapes formed by chopping the material randomly.

The hardness was measured by using a Rheoner (YAMADEN RHEONER2 CREEPMETER RE2-3305S: manufactured by Yamaden Co., Ltd.). A piece having a diameter of around 3 mm was taken from an obtained protein material and used as a sample. The measurement conditions were a load cell being 200 N, a plunger being a column of φ 3 mm and a sample entry speed being 0.5 mm/sec, and the maximum load (N: newton) was measured.

As for the pH, an obtained protein material was pulverized by a homogenizer, suspended in 10 times the amount of distilled water and centrifuged at 3,000 rpm for 10 minutes, and the obtained supernatant was measured by using a pH meter (HORIBA, LAQUA, pH METER, F-71).

As for the water content, an obtained protein material was pulverized by a food processor for one minute, 5 g of the pulverized material was taken and dried at 105°C for three hours by using a thermal dryer (manufactured by YAMATO, Drying Oven DX300), and calculation was made on the basis of the dried weight.

When the livestock meat-like protein material produced in the above-mentioned manner is added as a raw material of a food to which a livestock meat-like texture is desired to be given, such as fish meat sausages, fish meat hamburger steaks, chicken meat sausages, and chicken meat hamburger steaks, a livestock meat-like texture can be given. Regarding examples of the food, foods containing minced meat as a raw material, such as sausages, hamburger steaks, shao-mais, and spring rolls are suitable. It can also be used for a food imitating eels, shrimps, squids, or the like by using a fish meat paste, such as eel-like foods, shrimp-like foods and squid-like foods.

Addition to the food can be achieved by merely replacing a part of a protein material with the protein material of the present invention depending on the livestock meat-like feelings required for the food. As shown in the Examples, as the addition amount of the protein material of the present invention increases, the livestock meat-like texture becomes stronger. Specifically, around from 10 to 60% by weight and preferably around from 20 to 40% by weight of the entire raw material is suitably replaced. Depending on the aimed food, the size and the addition amount of the protein material of the present invention are appropriately adjusted.

When a certain amount of a heated gel food material is made to coexist with the protein material of the present invention in order to give a livestock meat-like texture, various textures are mixed and the livestock meat-like feeling becomes stronger. Examples of the gel food material include paste products produced from fish meat, chicken meat or the like as a raw material, by a conventional production method of kamaboko (a steamed/boiled/baked fish paste), chikuwa (a processed fish paste in a longish tubular shape) or the like. They are produced by adding seasonings, auxiliary materials and the like to minced meat which has been kneaded with added salt, and blending and heating the mixture. The gel food material has elasticity but has no hardness unlike in the present invention, and has different texture, and thus, the combination is effective. As for the addition amount of the heated gel food, it is preferably added to the food in an amount of from 5 to 50% by weight and preferably around from 10 to 40% by weight.

Although Examples of the present invention are described below, the present invention is not limited to these Examples.

### Example 1

### Production of Protein Materials with Livestock Meat-Like Texture Using Extruder (Comparison of Addition Amounts of Acetic Acid)

Frozen minced fish meat (Alaska pollock and Hairtail (Trichiurus lepturus)) was roughly kneaded with a silent cutter (defrosted and cut to the extent of giving fluidity) and subjected to a twin-screw extruder (EA20: manufactured by Suehiro EPM Corporation). The treatment was performed at a rate of rotation of the screw of 100 rotations/minute and barrel temperatures of 100, 120 and 140°C from the inlet side. The device was used in an open system so that pressure was not applied. Acetic acid was added from around the inlet of the raw material with a water-adding pump installed in the extruder device. Acetic acid used was obtained by diluting 90% acetic acid to 5% by weight, and the addition amount (% by weight) of acetic acid was adjusted to the amounts described in Table 1 based on the weight of the fish meat. The fish meat and acetic acid were heated and agitated with the extruder, thereby obtaining protein materials having a livestock meat-like texture.

The physical properties of the protein materials were measured by a Rheoner (YAMADEN RHEONER2 CREEPMETER RE2-3305S: manufactured by Yamaden Co., Ltd.). A piece having a diameter of around 3 mm was selected from each obtained protein material and used as a sample. The measurement conditions were a load cell being 200 N, a plunger being a column of φ 3 mm and a sample entry speed being 0.5 mm/sec, and the maximum loads (N: newton) were measured. The textures of the protein materials were evaluated by sensory testing. (The same evaluation methods were used in the other Examples). The evaluation was made on a scale from A to E below:
A: having a chewy feeling like livestock meat;
B: having a chewy feeling though it is weaker than that of livestock meat, and having a weak kamaboko-like texture;
C: having a weak chewy feeling, but having a texture close to that of kamaboko;
D: having a kamaboko-like texture; and
E: having a texture different from those of kamaboko and livestock meat.

The results are shown in Table 1. The protein materials of the test groups to which acetic acid was added all had a livestock meat-like texture. The reason why the cases of the acetic acid concentration of 0.82 or 0.89% were evaluated as E was that the high acetic acid concentration resulted in a slightly grainy texture like okara (bean curd residue).

**[Table 1]**

| Test Group | 1 | 2 | 3 | 4 |
|---|---|---|---|---|
| Acetic Acid (%) | 0 | 0.22 | 0.82 | 0.89 |
| Physical property (N) | 1.4 | 16.6 | 18.5 | 21.9 |
| pH | 7.24 | 6.1 | 4.9 | 5.7 |
| Water Content (%) | 72.3 | - | - | - |
| Sensory Testing | D | A | E | E |

### Example 2

### Production of Protein Materials with Livestock Meat-Like Texture Using Extruder (Comparison in Rates of Rotation)

Protein materials were produced under the same conditions as those of Example 1 except that only the rate of rotation of the extruder was changed. The addition amount of acetic acid was 0.675% by weight.

As the rate of rotation increased, the granule size of the protein material tended to be larger. This is considered to be caused by the balance between the denaturation by the acid and the progress of the binding by heating. In the case of the heating conditions of this Example, the material passed rapidly through the extruder when the rate of rotation was 150 rotations/minute or more. Thus, the granule size was large, and the treatment by heating or by the acid was insufficient. Although it is not shown in this Example, in the case of lower than 50 rotations/minute, a change in the hardness to livestock meat-like one was observed, but the granule size became very small, resulting in a protein material having a grainy texture. Also, yield rate decreased due to the loss of water by the acid and due to overheating, and the productivity was low.

**[Table 2]**

| Test Group | 1 | 2 | 3 | 4 |
|---|---|---|---|---|
| Rate of Rotation (rpm) | 50 | 100 | 150 | 200 |
| Physical property (N) | 26 | 20.4 | 13.6 | 12.7 |
| pH | 5.26 | 5.36 | 5.5 | 4.97 |
| Water Content (%) | 69.9 | 73.2 | 73.0 | 74.1 |
| Sensory Testing | B | B | E | E |

### Example 3

### Production of Protein Materials with Livestock Meat-Like Texture Using Extruder (Addition of Water to Meat Paste)

A meat paste produced by adding 2% by weight salt to minced fish meat (Upeneus japonicus) and blending the mixture with a silent cutter was subjected to a twin-screw extruder (α100: manufactured by Suehiro EPM Corporation). In Test Groups 2 and 3, 40% by weight and 60% by weight of water, respectively were added to the raw material when the meat pastes were prepared. The treatment was conducted at barrel temperatures of 160, 180, 195, and 200°C from the inlet side. The addition amounts of acetic acid, the properties of the obtained protein materials and the evaluation of the textures are shown in Table 3.

As shown by the results in Table 3, it can be seen that the addition amount of acetic acid based on the animal protein may be a similar level also in the case where water was added to the meat paste. Moreover, it was found that the rate of rotation of the screw may be increased and the sending rate may be faster as the amount of water added was larger. This is considered to be because the presence of water improves the agitation efficiency and the heating efficiency. It was confirmed that the property becomes soft by the addition of water and that a soft meat-like texture can be obtained.

**[Table 3]**

| Test Group | 1 | 2 | 3 |
|---|---|---|---|
| Addition of Water (%) | 0 | 40 | 60 |
| Rate of Rotation (rpm) | 100 | 110 | 130 |
| Acetic Acid (%) | 0.24 | 0.23 | 0.25 |
| Physical property (N) | 15.7 | 10.8 | 8.2 |
| pH | 6.47 | 6.25 | 6.28 |
| Water Content (%) | 70.2 | 80.3 | 79.8 |
| Sensory Testing | A | B | B |

### Example 4

### Production of Protein Materials with Livestock Meat-Like Texture Using Extruder (Chicken Meat)

Chicken-derived meat (gathering of meat and the like remaining on bones; minced chicken, manufactured by Sinkoh Co., Ltd.) was kneaded with salt by using a silent cutter and subjected to a twin-screw extruder (EA20: manufactured by Suehiro EPM Corporation). The treatment was performed at a rate of rotation of the screw of 50 rotations per minute and barrel temperatures of 80, 150 and 180°C from the inlet side. The addition concentrations of acetic acid, the properties of the obtained products and the evaluation of the textures are shown in Table 4.

It was found that a protein material having a livestock meat-like texture can be obtained as in the case of fish meat, by treating minced chicken, which will have a liver-like texture when heated as it is, by this production method, and found that behaviors similar to those of minced fish meat can be seen depending on the addition amount of acetic acid even though the processing conditions are different.

**[Table 4]**

| Test Group | 1 | 2 | 3 | 4 |
|---|---|---|---|---|
| Raw Material | Fish meat | Chicken meat | Chicken meat | Chicken meat |
| Acetic Acid (%) | 0.22 | 0.27 | 0.36 | 0.45 |
| Physical property (N) | 16.6 | 19.8 | 19.4 | 22.6 |
| Sensory Testing | A | A | A | A |

### Example 5

### Production of Livestock Meat-Like Fish Meat Sausages

The protein material (diameter of from 5 to 10 mm) of the present invention was added and blended at a concentration of 0%, 10%, 25% or 50% with a fish meat paste (65% Alaska pollock surimi, 2% salt, 8% starch, 9% liquid fat or oil, 6% spices/seasonings, and 10% added water). The meat pastes were stuffed into collagen casings and boiled at 80°C for 20 minutes, to thereby produce fish meat sausages. These fish meat sausages were sensory evaluated. The sensory evaluation was conducted by eight analytical panels, and the strengths of feeling "fish meat sausage texture" and "livestock meat sausage texture" were evaluated on a seven-step scale (from -3 to 3).

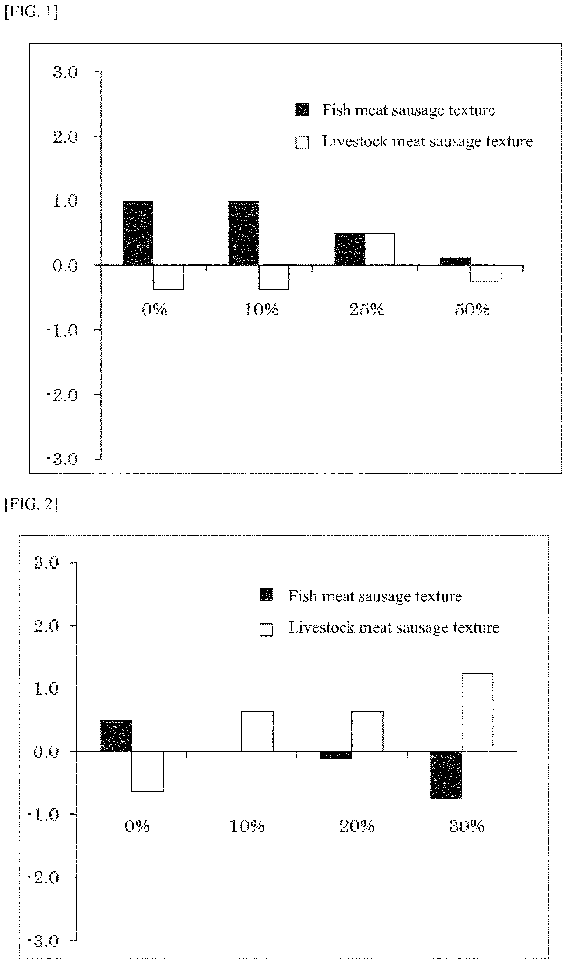

The results are shown in FIG. 1. It was confirmed that the fish meat sausage texture became weak and the livestock meat sausage texture became strong in the group with 25% addition. On the other hand, it was confirmed that the hardness of the protein material of the present invention was noticeable and the texture was different from those of fish meat and livestock meat in the group with 50% addition.

### Example 6

### Effects of Combination with Gel Food Material

In the same manner as in Example 5, the protein material of the present invention was added at a concentration of 0%, 10%, 20%, or 30% to a fish meat paste. As a gel food material, a heated fish meat gel (85% Alaska pollock surimi, 2% salt, 3% spices/seasonings, and 10% added water) was added and blended thereto at a concentration of 30%, followed by rough pulverization. This meat pastes were stuffed into collagen casings and boiled at 80°C for 20 minutes, to thereby produce fish meat sausages. Sensory evaluation was conducted in the same manner as in Example 5. Moreover, as Comparative Examples, fish meat sausages were produced by blending only the heated fish meat gel at a concentration of 0%, 10%, 25%, 35%, or 50% with the fish meat paste, and sensory testing was conducted in the same manner.

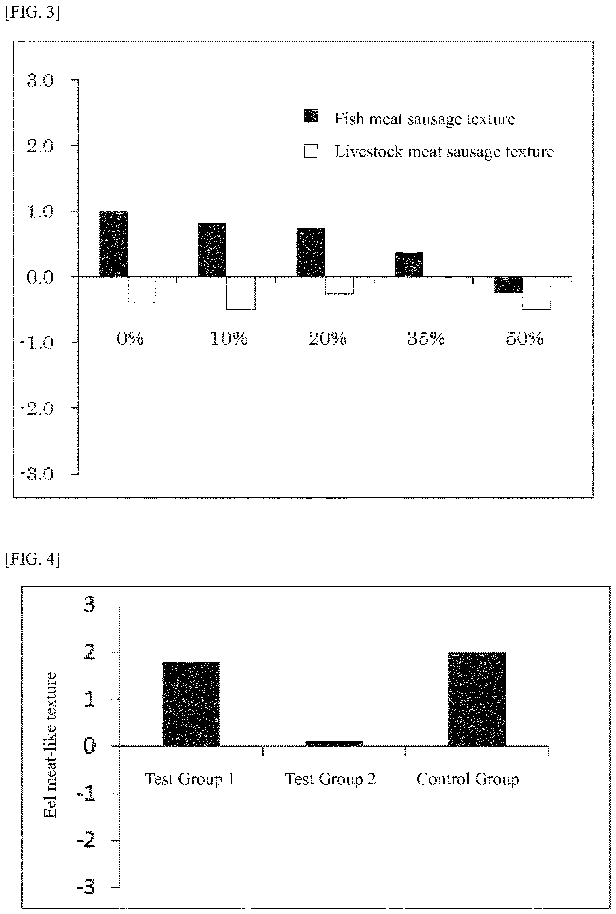

The results are shown in FIG. 2 and FIG. 3 (Comparative Example). It was confirmed that the fish meat sausage texture was less likely to be felt and only the livestock meat sausage texture came to be felt by combining the protein material of the present invention and the gel food material (FIG. 2). In the cases of the Comparative Examples, in which only the gel food material was blended with the fish meat paste to produce the fish meat sausages, the effects of the combination use with the protein material of the present invention were not obtained (FIG. 3).

### Example 7

### Effects of Organic Acid Other Than Acetic Acid

A fish meat paste (3% salt and 5% water were added to Land processed second grade surimi) was formed into 1-cm cube pieces and soaked in 0.1 M acetic acid (pH 2.86) or 0.1 M citric acid (pH 2.86 *adjusted with KOH) under the conditions of 4°C. Then, the resultants were heated (90°C, 15 minutes), neutralized and pulverized with a food processor for 30 seconds, and sensory evaluation of the fibrous feelings of the obtained granules having a granule size of 0.7 mm was conducted. As a control, granules were produced in the same manner without soaking.

Regarding the sensory evaluation, a half teaspoon of each of the granular materials without soaking, with soaking in acetic acid or with soaking in citric acid was taken in the mouth and masticated 30 times with the molar teeth on one side, and the strengths of "hardness" and "fibrous feeling (livestock meat feeling)" and whether "kamaboko feeling" was felt were evaluated on a seven-step scale (from -3 to +3) and on a five-step scale (from 0 to +4), respectively.

The results are shown in Table 5. It was confirmed that the granules which had been soaked in citric acid also had similar hardness and fibrous feeling to those with soaking in acetic acid, and had a texture different from that of a normal kamaboko-like fish meat gel.

**[Table 5]**

| | Without Soaking | Soaked in Acetic Acid | Soaked in Citric Acid |
|---|---|---|---|
| Hardness | -0.3 | 1.3 | 1.3 |
| Fibrous Feeling | -0.7 | 1.0 | 1.7 |
| Kamaboko Feeling | 2.0 | 0.0 | 0.0 |

### Example 8

### Production of Protein Material with Livestock Meat-Like Texture Using Fumaric Acid Coated with Solid Fat or Oil

A meat paste was produced by blending 89% by weight Alaska pollock surimi (grade RA), 2.7% by weight salt, 0.5% by weight potato starch, and 7.8% by weight added water (Composition 1). To Composition 2, fumaric acid coated with edible solid fat or oil (FC-33 manufactured by Ueno Food Techno Industry, Ltd) was further added in an amount of 0.8% by weight (containing 33.3% fumaric acid) based on the meat paste. The produced meat pastes were extruded into columns with a diameter of 8 mm, cut in a length of around from 5 to 15 mm, and heated at 98°C for 7 minutes, to thereby produce protein materials.

The physical properties, pH and the evaluation of texture of the obtained protein materials are shown in Table 6. In Composition 2, fumaric acid, which is an organic acid, acted because the coating fat or oil melted during heating, and a material having a livestock meat-like texture that was different from that of normal fish meat gel for kamaboko could be produced.

**[Table 6]**

| Test Group | Composition 1 | Composition 2 |
|---|---|---|
| Fumaric Acid (% by weight) | 0 | 0.26 |
| Physical property (N) | 7.9 | 13.5 |
| pH | 7.2 | 6 |
| Sensory Testing | D | A |

### Example 9

### Application in Food having Eel Meat-Like Texture

The protein material of the present invention which had been cut into a size of a diameter of around from 1 to 5 mm (Test Group 1) or particles of soybean protein which had been rehydrated (Test Group 2) in an amount of 10% was added to 50% by weight Land processed second grade surimi, 13% by weight lard, 2% by weight tapioca starch, 2% by weight mirin (sweet rice wine), 3% by weight eel extract, and 20% by weight added water, to thereby produce meat pastes, which were shaped like an eel meat. The resultants were heated at 98°C for 10 minutes, to thereby produce eel-meat like products. Using eel meat for a Control Group, the strengths of "eel meat-like texture" of the Test Groups 1 and 2 were evaluated on a seven-step scale (from -3 to +3) by sensory evaluation. The results are shown in FIG. 4. Test Group 1, to which the protein material of the present invention was added, had a texture similar to that of the eel meat of the Control Group.

### INDUSTRIAL APPLICABILITY

According to the present invention, a livestock meat-like protein material can be provided by using fish meat or chicken meat as a raw material. Foods such as fish meat sausages, hamburger steaks and spring rolls that have a livestock meat-like texture can be produced by using the protein material.

## Claims

1. A method for producing a protein material having a livestock meat-like texture, comprising performing an addition of an organic acid and a heating and a chopping by agitation at the same time, with respect to a paste of fish meat or chicken meat, wherein
the addition amount of the organic acid based on the fish meat or the chicken meat is from 0.1 to 1.0% by weight, and
heating is performed in a manner that the core temperature becomes 80 to 100°C in the end.

2. The method according to Claim 1, performing the addition of the organic acid and the heating, at the same time by a method using an extruder or a silent cutter, or substantially at the same time by a method of mixing an organic acid preparation from which the organic acid functions through the heating with the paste of the fish meat or the chicken meat, performing a chopping and then, performing the heating.

3. The method according to Claim 1 or 2, wherein the organic acid is any of acetic acid, citric acid, succinic acid, and fumaric acid, or a mixture thereof.

4. The method according to any one of Claims 1 to 3, wherein operational conditions of an extruder are a rate of rotation of the screw being from 50 to 250 rotations/minute and a barrel temperature being from 80 to 200°C.

5. The method according to any one of Claims 1 to 4, wherein the livestock meat-like protein material has properties of a hardness of from 8 to 30 N, a pH of from 5 to 7 and a water content of from 70 to 85%.

6. A method for producing a livestock meat-like food, comprising mixing the livestock meat-like protein material produced by the method described in any one of Claims 1 to 5 with a meat paste, and performing a shaping and a heating.

7. The method according to Claim 6, further comprising mixing a granular gel material with the meat paste.

8. A protein material of a fish meat or a chicken meat with a livestock meat-like texture, having a granular form having a hardness of from 8 to 30 N, a pH of from 5 to 7, a water content of from 70 to 85%, and a size of from 0.2 to 10 mm.

9. The use of the protein material of Claim 8 to prepare a food having a livestock meat-like texture, wherein the protein material is dispersed in a meat paste.

10. The use according to Claim 9, wherein a granular gel material is further dispersed in the meat paste.

11. The use according to Claim 9 or 10, wherein the food is a sausage, a hamburger steak, a shao-mai, a spring roll, an eel-like food, a shrimp-like food, or a squid-like food.

## Patentansprüche

1. Verfahren zum Erzeugen eines Proteinmaterials mit einer viehfleischartigen Textur, umfassend ein Hinzufügen eines Zusatzes einer organischen Säure und ein Erwärmen und Zerkleinern zur selben Zeit in Bezug auf eine Paste aus Fischfleisch oder Hühnerfleisch durchzuführen, wobei
die Zusatzmenge an organischer Säure basierend auf dem Fischfleisch oder dem Hühnerfleisch 0,1 bis 1,0 Gew.-% beträgt, und
eine Erwärmung auf eine Weise erfolgt, dass die Kerntemperatur am Ende 80 bis 100°C ist.

2. Verfahren nach Anspruch 1, wobei der Zusatz der organischen Säure und die Erwärmung zur selben Zeit durch ein Verfahren unter Verwendung eines Extruders oder stillen Schneiders erfolgt oder im Wesentlichen zur selben Zeit durch ein Verfahren des Mischens einer organischen Säurezubereitung, aus der die organische Säure durch das Erwärmen der Paste aus Fischfleisch oder Hühnerfleisch wirkt, des Zerkleinerns und dann des Erwärmens erfolgt.

3. Verfahren nach Anspruch 1 oder 2, wobei es sich bei der organischen Säure um Essigsäure, Zitronensäure, Bernsteinäure und/oder Fumarsäure oder ein Gemisch von diesen handelt.

4. Verfahren nach einem der Ansprüche 1 bis 3, wobei die Betriebsbedingungen eines Extruders eine Drehrate der Schraube, die 50 bis 250 Drehungen/Minute beträgt, und eine Fasstemperatur sind, die 80 bis 200°C beträgt.

5. Verfahren nach einem der Ansprüche 1 bis 4, wobei das viehfleischartige Proteinmaterial Eigenschaften einer Härte von 8 bis 30 N, einen pH von 5 bis 7 und einen Wassergehalt von 70 bis 85% hat.

6. Verfahren zum Herstellen eines viehfleischartigen Lebensmittels, umfassend das viehfleischartigen Proteinmaterial, das durch das in einem der Ansprüche 1 bis 5 beschriebenen Verfahren hergestellt wurde, mit einer Fleischpaste zu mischen und eine Formung und ein Erwärmen durchzuführen.

7. Verfahren nach Anspruch 6, ferner umfassend, ein körniges Gelmaterial mit der Fleischpaste zu mischen.

8. Proteinmaterial aus einem Fischfleisch oder Hühnerfleisch mit einer viehfleischartigen Textur in körniger Form, die eine Härte von 8 bis 30 N, einen pH von 5 bis 7, einen Wassergehalt von 70 bis 85% und eine Größe von 0,2 bis 10 mm hat.

9. Verwendung des Proteinmaterials nach Anspruch 8, um ein Lebensmittel mit einer viehfleischartigen Textur herzustellen, wobei das Proteinmaterial in einer Fleischpaste aufgelöst ist.

10. Verwendung nach Anspruch 9 wobei ein körniges Gelmaterial darüber hinaus in der Fleischpaste aufgelöst ist.

11. Verwendung nach Anspruch 9 oder 10, wobei das Nahrungsmittel eine Wurst, ein Hamburger Steak, eine Shao-Mai, eine Frühlingsrolle, ein aalartiges Nahrungsmittel, ein shrimpartiges Nahrungsmittel oder ein tintenfischartiges Nahrungsmittel ist.

## Revendications

1. Procédé de production d'une matière protéique présentant une texture analogue à la viande de bétail, comprenant la réalisation d'une addition d'un acide organique et d'un chauffage et d'un hachage par agitation simultanément, relativement à une pâte de chair de poisson ou de viande de poulet, dans lequel
la quantité d'addition de l'acide organique sur la base de la chair de poisson ou de la viande de poulet va de 0,1 à 1,0 % en poids, et
le chauffage est réalisé de telle sorte que la température à coeur finisse par atteindre les 80-100 °C.

2. Procédé selon la revendication 1, la réalisation de l'addition de l'acide organique et du chauffage, simultanément par un procédé utilisant une extrudeuse ou un couteau rotatif, ou sensiblement simultanément par un procédé de mélange d'une préparation d'acide organique à partir de laquelle l'acide organique agit par l'intermédiaire du chauffage avec la pâte de la chair de poisson ou de la viande de poulet, la réalisation d'un hachage puis, la réalisation du chauffage.

3. Procédé selon la revendication 1 ou 2, dans lequel l'acide organique est l'un quelconque parmi l'acide acétique, l'acide citrique, l'acide succinique, et l'acide fumarique, ou un mélange de ceux-ci.

4. Procédé selon l'une quelconque des revendications 1 à 3, dans lequel les conditions opérationnelles d'une extrudeuse sont une vitesse de rotation de la vis étant de 50 à 250 rotations/minute et une température de corps étant de 80 à 200 °C.

5. Procédé selon l'une quelconque des revendications 1 à 4, dans lequel la matière protéique analogue à de la viande de bétail présente des propriété d'une dureté allant de 8 à 30 N, un pH allant de 5 à 7 et une teneurs en eau allant de 70 à 85 %.

6. Procédé de production d'un aliment analogue à de la viande de bétail, comprenant le mélange de la matière protéique analogue à de la viande de bétail produite par le procédé décrit dans l'une quelconque des revendications 1 à 5 avec une pâte de viande, et la réalisation d'une mise en forme et d'un chauffage.

7. Procédé selon la revendication 6, comprenant en outre le mélange d'une matière en gel granulaire avec la pâte de viande.

8. Matière protéique d'une chair de poisson ou d'une viande de poulet avec une texture analogue à de la viande de bétail, présentant une forme granulaire présentant une dureté allant de 8 à 30 N, un pH allant de 5 à 7, une teneur en eau allant de 70 à 85 %, et une taille allant de 0,2 à 10 mm.

9. Utilisation de la matière protéique de la revendication 8, pour préparer un aliment présentant une texture analogue à la viande de bétail, dans laquelle la matière protéique est dispersée dans une pâte de viande.

10. Utilisation selon la revendication 9, dans laquelle une matière en gel granulaire est en outre dispersée dans la pâte de viande.

11. Utilisation selon la revendication 9 ou 10, dans laquelle l'aliment est une saucisse, un steak haché, un shaomai, un rouleau de printemps, un aliment de type anguille, un aliment de type crevette, ou un aliment de type calamar.
